# FASCICULE DE BREVET EUROPEEN

(11) **EP 0 273 840 B1**
(45) Date de publication et mention de la délivrance du brevet: **18.11.1993**
(21) Numéro de dépôt: 87420353.2
(22) Date de dépôt: 22.12.1987
(51) Int. Cl.: G09F 3/02, B65D 75/52, B65D 71/00

(54) **Elément support d'informations apte à obturer et/ou couvrir un ou plusieurs récipients ou articles et ses procédés de fabrication et les emballages obtenus**
Trägerelement für Informationen, geeignet zum Verschliessen und/oder Bedecken von einem oder mehreren Behältern oder Artikeln, Verfahren zu seiner Herstellung sowie die erhaltenen Verpackungen
Information carrier element able to close and/or cover one or more containers or articles, its production method and wrappings obtained

(30) Priorité: 23.12.1986 FR 8618464; 14.12.1987 FR 8717956
(43) Date de publication de la demande: 06.07.1988
(73) Titulaire: INJELEC S.A., F-69120 Vaulx en Velin (FR)
(72) Inventeur: Oriol, Jean-René, F-42110 Feurs (FR)
(74) Mandataire: Dupuis, François

(56) Documents cités:
- FR-A- 2 024 128
- FR-A- 2 507 364
- FR-A- 2 510 939
- FR-A- 2 579 184
- US-A- 4 202 464

## Description

L'invention a pour objet un élément support d'informations apte à obturer et/ou couvrir un ou plusieurs récipients ou articles, et ses procédés de fabrication et les emballages obtenus.

L'invention se rattache aux secteurs techniques des emballages et conditionnements en particulier et non limitativement de produits alimentaires avec un étiquettage sur une face d'obturation ou de couverture et sur une ou plusieurs de leurs autres faces latérales.

Selon l'art antérieur, on utilise des emballages ou conditionnements sous forme de boitiers avec un réceptacle, de produits alimentaires, recevant un couvercle de protection. Il est nécessaire de procéder à un étiquettage pour identifier le contenu. Généralement, ces étiquettes sont réalisées en papier imprimé séparémment sur une ou plusieurs des faces de l'emballage. Ces étiquettes sont apposées après que les éléments constitutifs de l'emballage aient été exécutés, et sont fixées par collage ou autre procédé connu.

Dans une utilisation particulière aux produits frais surgelés, glaces et produits similaires, liés à un environnement de conservation du froid de l'ordre de moins 15 degrés, on a constaté certains inconvénients dans l'utilisation d'étiquettes en papier. Les réceptacles et couvercles sont réalisés en matière plastique thermoformée ou injectée pour des considérations de production et de prix de revient. La matière plastique peut être du type polystyrène et similaires. En pratique, les fibres de papier sont simplement pénétrées par le matériau constitutif du couvercle ou du réceptacle. La présentation obtenue présente des inconvénients et notamment il apparait des boursouflures ou cloques nuisant à la qualité de présentation et d'impression de l'étiquette.

Cela résulte du fait que le papier est extrêmement sensible à la reprise d'humidité de l'air ambiant. Or, si le degré d'hygrométrie de l'étiquette est trop élevé lors de l'injection du couvercle, la température élevée jusqu'à 250°C ajoutée aux pressions importantes de l'ordre de 1.800 kgs/cm2, transforme l'eau en vapeur ce qui créé les cloques constatées, celles-ci provoquent une délamination du papier qui ne cesse de s'aggraver au cours des différents chocs thermiques qui peuvent se produire, l'étiquette se détruisant.

On doit également tenir compte du fait que les différents emballages de produits alimentaires sont présentés dans des meubles vitrines autorisant leur lecture non seulement par le haut mais également sur les côtés.

Cette nouvelle présentation et mise en valeur des produits pose certains problèmes dans la conception d'emballages et l'identification des produits. C'est par exemple le cas dans l'industrie des crèmes glacées, qui comporte dans la gamme de ses produits des glaces et des sorbets conditionnés en boîtes plastiques généralement dans deux contenances, 1 litre et deux litres. On se trouve confronté à un problème non solutionné à ce jour avec les techniques classiques existantes actuellement. En effet, toutes les boîtes ont leurs couvercles qui lors de leur fabrication par injection sont automatiquement dotés d'une étiquette papier imprimée en quadrichromie offset, ceci pour assurer l'identification du produit, et également servir d'incitation pour sa vente. Cette solution était satisfaisante dans les anciens meubles frigorifiques où les produits ne pouvaient être visualisés par le consommateur que vue de dessus. Cette solution est insuffisante dans la présentation des meubles vitrines où les distributeurs réclament une visualisation d'au moins un ou deux côtés du bac ou boîte. La multiplicité des parfums, multiplié par la variété crème ou sorbet, multiplié par la contenance des réceptacles, un litre ou deux interdisant beaucoup de solutions ayant actuellement cours sur le marché.

Par ailleurs, il y a lieu de rappeler que ces bôites, en matière plastique, sont fabriquées en très grande série et selon les indications du déposant qui connait parfaitement ce secteur technique, il faut moins de cinq secondes pour une machine pour poser, préformer le couvercle et polymériser l'étiquette dessus, et un temps du même ordre pour remplir la boîte de son contenu et apposer et verrouiller selon le cas le couvercle sur la boîte. Il y a donc des impératifs techniques de temps, de production et de coût de revient pour que l'emballage du produit soit compétitif.

Compte tenu du problème posé qui est de faire une inscription sur le ou les flancs du boîtier, une technique a été proposée qui consiste en ce que la face supérieure du couvercle présente sur au moins un de ses côtés un prolongement profilé susceptible de recevoir après rabattement le flanc en regard du boîtier, des moyens de verrouillage assurant la liaison du corps de bôite et de l'extrémité dudit flanc. Dans ce cas, la face apparente dudit prolongement présente un étiquettage. Cette solution a été décrite dans le brevet français n° 84.16325.

En pratique, cette solution s'avère difficile à mettre en oeuvre.

Dans le même ordre d'idées, il a été proposé dans le brevet US 3412889 un couvercle d'emballage agencé avec des pans latéraux articulés susceptibles de recouvrir les côtés latéraux du boîtier. Cette solution n'est pas exploitable compte tenu des coûts de fabrication excessifs d'un tel couvercle. Une telle conception est également connue du document FR-A-2 507 364
Ainsi, compte tenu de la nature du matériau utilisé en polystyrène des boîtes et couvercles d'emballage précités, il n'existe pas de méthode d'étiquettage satisfaisante susceptible de répondre au problème posé dans des conditions de productivité raisonnables, étant rappelé qu'il s'agit d'emballages jetables. Cela est d'autant plus contraignant que les emballages sont disposés dans un environnement d'humidité et de froid, il faut donc que l'étiquettage ne soit pas dégradable.

Le but recherché était donc de trouver une solution fiable et nouvelle pour obvier à l'ensemble des inconvénients précités. Celui-ci est atteint par l'invention qui apporte de nombreux avantages au niveau de l'information, du stockage des différents composants, de l'inviolabilité de l'emballage obtenu, en étant adapté à toutes formes de présentation.

Un autre but était de trouver une solution pour le conditionnement de produits alimentaires en général et non limitativement avec une utilisation particulière aux conditionnement et emballages de l'industries des crèmes glacées.

Ainsi, le demandeur a été amené à trouver et mettre au point une nouvelle conception oléfinies dans les revendications 1 et 8 et fabrication d'un élément support d'informations apte à obturer et couvrir un ou plusieurs récipients.

L'élément support d'informations constitue en soi un produit nouveau aux multiples applications.

Selon une première caractéristique de l'invention, l'élément support d'informations est constitué par un film en matière plastique imprimé appelé film-étiquette dont les formes et dimensions permettent d'obturer et/ou de couvrir un ou plusieurs récipients ou une de leurs faces dans le même plan, et sur une ou plusieurs de la ou leurs autres faces dans d'autres plans.

Selon une autre caractéristique, l'élément support d'informations est constitué d'une part par un film en matière plastique imprimé appelé film-étiquette dont les formes et dimensions permettent d'obturer et/ou de couvrir un ou plusieurs récipients ou une de leurs faces dans le même plan, et sur une ou plusieurs de la ou de leurs faces dans l'autres plans, et d'autre par un support du matériau plastique surmoulé sur le film étiquette à l'endroit ou partie correspondant aux zones d'obturation et de recouvrement en laissant libres et pendantes une ou des parties de film-étiquette débordantes formant oreilles pour couvrir après pose de l'élément support sur le ou les récipients remplis et rabattement de la ou des parties du film-étiquettes pendantes sur la ou les autres faces ou côtés du ou des récipients ou articles et fixation à celles-ci.

Selon une autre caractéristique, le procédé de mise en oeuvre de l'élément support d'informations est remarquable en ce que l'on fabrique un film-étiquette en matière plastique imprimé dont les formes et dimensions correspondent à l'étiquettage obturant et couvrant un ou plusieurs récipients sur la ou leurs faces supérieures et sur une ou plusieurs de leurs autres faces, on positionne au moins un film-étiquette en égard d'au moins un moule à un ou plusieurs étages d'une presse à injecter ou à thermoformer de manière qu'un ou plusieurs supports en matière plastique puisse être injecté ou thermoformé par surmoulage sur le ou les films-étiquette à l'endroit des parties correspondant aux zones d'obturation et de recouvrement, en laissant libres et pendantes une ou des parties de films débordantes formant oreilles.

Selon une autre caractéristique, les procédé de mise en oeuvre de l'élément support d'informations est remarquable en ce qu'il consiste à fabriquer un film en matière plastique imprimé dont les formes et dimensions correspondent à l'étiquettage obturant et/ou couvrant un ou plusieurs récipients ou articles, puis à surmouler sur le ou lesdits films-étiquette un support en matière plastique injectée ou thermoformée à l'endroit des parties correspondantes aux zones d'obturation et de recouvrement en laissant libre et pendante une ou des parties de film-étiquette débordantes formant oreilles, puis à remplir le ou les récipients de leurs contenus, puis à positionner l'élément support d'informations sur le ou les récipients, puis à rabattre la ou les parties de film-étiquette débordantes sur la ou les autres faces du ou des récipients, puis à les fixer sur ces derniers.

Selon une autre caractéristique, l'élément support d'informations est disposé sur un réceptacle d'emballage pour produits alimentaires frais.

Selon une autre caractéristique, l'élément support d'informations est disposé et constitue un moyen de liaison et de recouvrement de plusieurs récipients juxtaposés constituant un poste d'emballage.

Selon une autre caractéristique, l'élément support d'informations comprend une plaque film en matière plastique, imprimée en offset, correspondant au format et dimensions d'une étiquette recouvrant la partie supérieure du couvercle de l'emballage et au moins deux de ses faces latérales, ledit film étant fixé sur la collerette ou bordure périphérique du couvercle et par ses extrémités inférieures au niveau du fond du réceptacle constituant un jambage.

Ces caractéristiques et d'autres encore ressortiront bien de la suite de la description.

Pour fixer l'objet de l'invention illustré d'une manière non limitative aux figures des dessins.
- La figure 1 est une vue en perspective de l'élément support dans une première forme de réalisation.
- La figure 2 est une vue en coupe transversale illustrant l'empilage et le stockage de plusieurs éléments d'informations selon la figure 1.
- La figure 3 est une vue à caractère schématique illustrant le procédé de fabrication de l'élément support d'informations selon une première mise en oeuvre, vue figurée à l'horizontale et pouvant être à la verticale.
- La figure 4 est une vue à caractère schématique illustrant le procédé de fabrication de l'élément support d'informations selon une seconde mise en oeuvre, vue figurée à l'horizontale et pouvant être à la verticale.
- La figure 5 est une vue en variante illustrant le procédé de fabrication de l'élément support d'informations, vue figurée à l'horizontal et pouvant être à la verticale.
- La figure 6 est une vue en perspective d'un emballage comprenant un réceptacle et un élément support d'informations, cet emballage étant par exemple un bac à glace.
- La figure 7 est une vue en coupe transversale selon la figure A-A de la figure 6.
- La figure 8 est une vue en variante en coupe transversale illustrant la fixation et liaison de parties de film débordantes.
- La figure 9 est une vue en variante d'un élément support d'information dans une seconde réalisation pour couvrir plusieurs récipients.
- La figure 10 est une vue en variante d'un élément support d'informations dans une troisième forme de réalisation.
- La figure 11 est une vue en perspective d'un emballage obtenu et étiqueté selon une mise en oeuvre particulière de l'invention.
- La figure 12 est une vue en coupe transversale selon la ligne B-B de la figure 11.
- La figure 13 est une vue à caractère schématique illustrant une partie de bobine préimprimée et prédécoupée du film-étiquette recouvrant l'échantillon, selon les figures 11 et 12.
- La figure 14 est une vue partielle à grande échelle d'un film complexe utilisé selon les figures 11-12-13.

Afin de rendre plus concret l'objet de l'invention, on le décrit maintenant d'une manière non limitative illustrée aux figures des dessins.

Selon l'invention, l'élément support d'informations est constitué par un film-étiquette (1) en matière plastique imprimé en offset ou autre procédé d'impression. Ce film-étiquette est établi aux formes et dimensions de un ou plusieurs réceptacles à obturer et/ou à couvrir sur une ou leurs faces dans le même plan, et sur un ou plusieurs de la ou des autres faces dans d'autres plans. Dans une première mise en oeuvre d'un même concept, l'élément support comprend en outre un support (2) en matériau plastique injecté, ou thermoformé, surmoulé à l'endroit ou partie (1.1) correspondant aux zones d'obturation et de recouvrement en laissant libres ou pendantes une ou des parties de film-étiquette débordantes (1.2) formant oreilles.

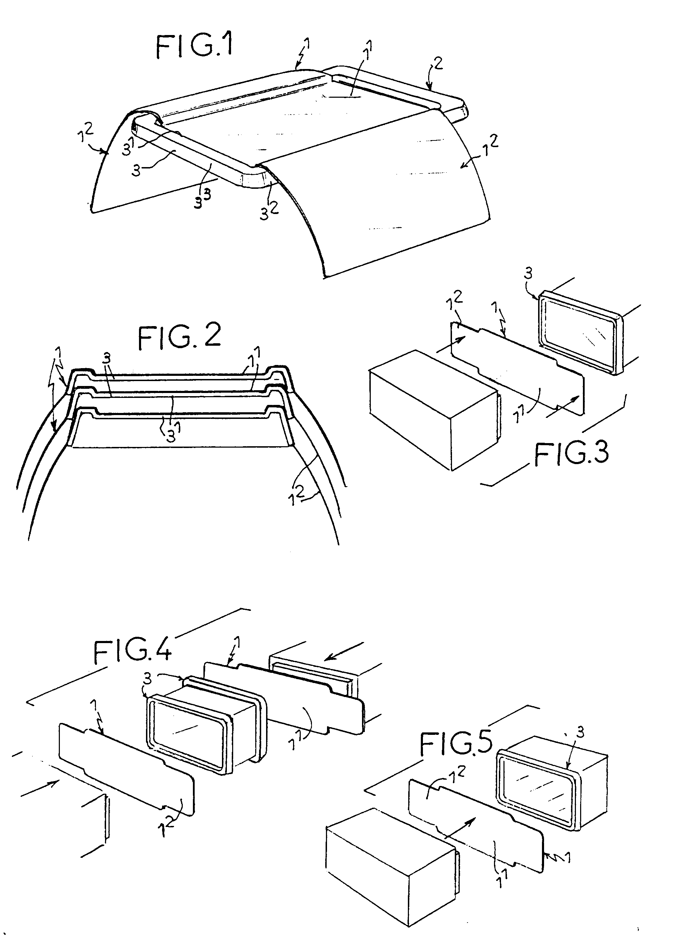

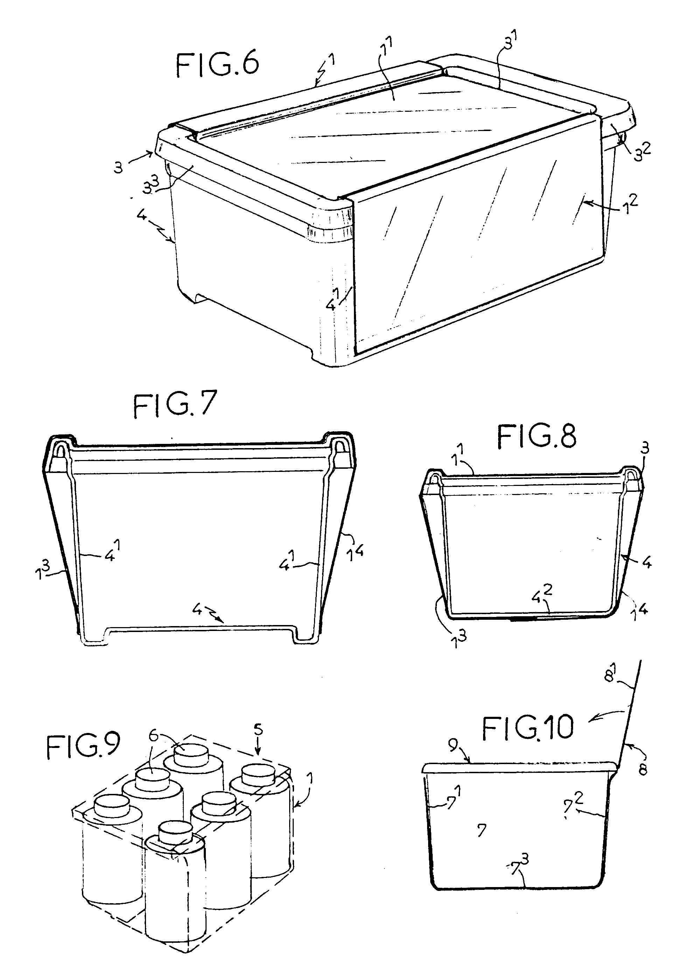

En faisant référence aux figures 2 et 6, le support moulé par injection ou thermoformage se présente sous la forme d'un couvercle (3) de forme parallélipédique pour s'emboîter sur une form complémentaire d'un réceptacle (4) agencé également avec une bordure périphérique (4.1). Le film-étiquette (1) épouse étroitement les formes et profils du couvercle, de son plan supérieur (3.1), de ses bordures longitudinales (3.2), et éventuellement les bordures transversales (3.3) non illustrées dans ce cas présent. Le couvercle injecté ou thermoformé est donc surmoulé sur le film-étiquette plastique imprimé à l'endroit le ses différentes formes et profils et laisse libres ou pendantes les extrémités (1.2) débordantes du film-étiquette. Différentes possibilités sont offertes en relation avec la ou les parties pendantes du film. On peut par exemple avoir un élément support d'informations présentant deux parties de film (1.3-1.4) opposées débordantes s'adaptant et se fixant soit sur les faces latérales (4.1) du réceptacle (4), soit sous la face inférieure (4.2) de ce dernier en venant bout à bout, ou se superposant partiellement (figure 8).

L'élément support d'informations peut présenter une seule partie débordante susceptible alors de banderoler tout le volume du réceptacle en recouvrant en une seule fois une première face latérale, la face inférieure et la face latérale opposée à la précédente, l'extrémité du film-étiquette étant fixée sur ladite seconde face latérale. L'élément support d'informations peut présenter également pour un réceptacle polygonal plusieurs parties de film débordantes en regard de chacune des faces de celui-ci. Il est bien évident que la forme et dimensions du support (2) en matériau plastique injecté est d'une forme complémentaire et adaptée pour couvrir le réceptacle ou article considéré aux formes et dimensions les plus variées, circulaires, polygonales et autres.

Dans le cas de la réalisation de la figure 9, l'élément support d'information (5) objet de l'invention constitue un moyen de liaison et de recouvrement de plusieurs récipients (6) juxtaposés constituant un pack d'emballage. Ce type d'emballage est par exemple utilisé pour des conditionnements de produits alimentaires tels que yaourts, boites métalliques pour boissons et divers. L'élément support (5) selon l'invention est donc disposé sur le plan supérieur défini par l'ensemble des récipients et est soit solidarisé à ces derniers par des moyens appropriés, soit simplement posé dessus, comme précédemment en laissant déborder la ou les parties de film-étiquette pendantes qui seront ensuite rabattues et fixées soit sur les faces latérales apparentes des récipients, soit sous la face de dessous de ceux-ci.

L'élément support peut lui-même être agencé avec des ouvertures de passage des parties proéminentes des produits ou récipients protégés et assurer leur maintien et verrouillage en position.

Dans le cas de la figure 10, l'élément support (7) présente lui-même la forme d'un réceptacle. Le film (8) imprimé est donc fixé lors du surmoulage par exemple sur les faces (7.1-7.2) latérales et de dessous (7.3) en laissant apparaitre une oreille (8.1). Celle-ci vient après rabattement et pose d'un couvercle (9) coiffer celui-ci de la manière décrite selon l'invention.

Si l'on fait maintenant référence à la structure et composition du film-étiquette, celle-ci doit s'accorder à la nature du matériau constitutif du ou des récipients ou emballages sur lesquels il est apposé, ou être accordé par un produit liant.

Dans le cas particulier des boites et couvercles à destination aux produits alimentaires et en particulier des produits du type glaces et similaires, les boites et couvercles sont réalisés notamment en polystyrène. Dans ce cas, le film en matière plastique formant film-étiquette peut être avantageusement un film dit "compound" réalisé dans une matière thermoplastique constituée par un mélange de dosages appropriés de polypropylène et de polystyrène. Ce film est d'une épaisseur de l'ordre de 50 à 150 microns et avantageusement de 80 à 100 microns. Ce compound spécial permet d'obtenir une résistance mécanique suffisante aux déchirements dans le sens transversal, le seul qui soit accessible après la pose du film autour de la boîte. Sa composition permet sans difficulté un mariage intime et indissoluble du film et du polystyrène qui compose le couvercle injecté. De par l'intégration de ses composants, il est particulièrement adapté pour suivre le profil complet du couvercle sans que des tensions contraires puissent apparaître liées à chacun des matériaux composites. Le film compound est ainsi réalisé pour recouvrir totalement le profil du couvercle, c'est-à-dire l'évidement intérieur et les deux bordures longitudinales, et éventuellement en plus la totalité du profil relatif aux bordures transversales, en bénéficiant de l'élasticité propre au film.

La nature du compound est évidement fonction de la nature du matériau constitutif du réceptacle et du support du film injecté ou thermoformé par surmoulage.

Dans une variante de réalisation, l'élément support selon l'invention peut être rapporté et fixé sur la face inférieure d'un réceptacle pour lui faire jouer une fonction de protection à l'environnement extérieur.

Dans ce cas les parties de film débordantes sont fixées sur les faces latérales du réceptacle.

D'une manière générale, lesdites parties de film débordantes sont fixées aux parois du ou des réceptacles ou récipients ou articles par collage, thermocollage ou autres après les avoir obturer et/ou couvert avec l'élément support assurant un montage et une fonction d'inviolabilité du conditionnement.

Il est convenu dès lors d'exposer plus en détail le procédé de fabrication de l'élément support d'informations objet de l'invention, dans la mise en oeuvre précitée.

La mise en fabrication par surmoulage du couvercle ou autre support injecté ou thermoformé, sur le film-étiquette imprimé peut s'effectuer de plusieurs manières mettant toutefois en oeuvre un même concept.

Dans une première mise en oeuvre, on considère que les films-étiquettes sont préétablis selon des formats correspondant à la surface du couvercle ou autre support et de tout ou parties des faces du réceptacle ou autre support et sont insérés dans un magasin d'alimentation situé au-dessus de l'empreinte et du moule femelle d'une presse à injecter ou à thermoformer. Des moyens de saisie pour le positionnement et présentation du film-étiquette interviennent pour positionner le film-étiquette entre l'empreinte et le moule femelle précités. Les moyens sont par exemple des palpeurs ou suceurs, manipulateurs qui agissent et maintiennent le film-étiquette verticalement à partir d'au moins une de ses oreilles ou parties pendantes ou selon une position horizontale. Elles se trouvent donc à l'extérieur du volume du moule et des moyens de formation du support ou couvercle. Lorsque le support tel qu'un couvercle est surmoulé, les palpeurs sont désactivés et les oreilles restent libres. Le support ou couvercle est alors ejecté avec les oreilles pendantes. Les oreilles extrêmement souples n'apporteront aucun perturbation dans l'empilage, l'emballage, le désempilage et l'operculage des boîtes sur machine automatique une fois la boîte ou réceptacle operculée par son support ou couvercle à oreilles souples, il devient aisé de rabattre en position tendue les parties pendantes du film-étiquette et de les thermocoller ou coller sur le réceptacle ou sur la face de dessous.

Il y a lieu de souligner que par cette mise en oeuvre particulière on peut utiliser des moules dits "bit-étagés" augmentant ainsi considérablement la production.

Dans une seconde mise en oeuvre, on réalise un appareillage automatique qui contrôle l'opération depuis la fabrication du film-étiquette jusqu'à sa pose par surmoulage du couvercle ou support injecté ou thermoformé. Dans ce cas l'appareillage comprend en amont un poste relatif à un dévidoir de bobine d'un film imprimé réalisé de la manière décrite précédemment. Ce film est réalisé dans une laize d'environ 50mm supérieure au format du film-étiquette. Le film en bobine est déroulé à l'aide de moyens mécaniques appropriés. Le film est positionné avec précision sur la position exacte de son impression face à l'outil qui assure sa découpe au format établi. la forme ainsi obtenue après découpe est maintenue tendue par des moyens susceptibles de la déplacer et de la positionner entre l'empreinte et le moule femelle de la presse. Les moyens sont comme précédemment des palpeurs, ou suceurs, manipulateurs qui agissent en maintenant la force préétablie par au moins une de ses oreilles situées hors du plan de fermeture de la presse. La forme découpée du reste du film est bobinée de l'autre côté de la presse. On obtient ainsi une automatisation complète.

En variante des mises en oeuvre précitées, on peut également concevoir que le film-étiquette est simplement poussé manuellement ou par des robots à l'intérieur du moule tout en laissant libre les oreilles destinées à recouvrir les faces latérales des réceptacles, le support tel que couvercle étant injectée ou thermoformé,et surmoulé sur la zone du film situé dans le fond du moule.

L'élément support d'informations ainsi réalisé présente de nombreux avantages et offre notamment une qualité irréprochable de finition. La nature du film utilisé permet un mariage complet entre le support surmoulé et le film imprimé comparable à une co-extrusion d'où une impossibilité absolue de les séparer. En outre, le film étiquette plastique est invulnérable à l'eau et à la vapeur d'eau et ne peut provoquer de cloques ou boursouflures comme indiqué initialement avec le papier.

Par ailleurs, le système de présentation nouveau et inédit permet le soutien publicitaire du produit pour l'impression qui figure sur ses oreilles ou parties pendantes cette impression étant réalisée simultanément à celle sur le dessus du support tel que couvercle, soit à un coût bien inférieur.

Les oreilles peuvent soit être rabattues sur les flancs latéraux du réceptacle, soit être rabattues sous la boîte. On peut dès lors imprimer à cet endroit du film étiquette toutes les indications indispensibles ou obligatoires qui peuvent nuire à la présentation du produit telles que code barre, composition, délai de conservation, conseils utiles pour les consommateurs.

Un autre avantage réside dans l'inviolabilité de l'emballage.

Un autre avantage de l'invention réside dans la comparaison de l'ensemble de l'emballage obtenue selon l'invention, en égard d'une étiquette papier posée à la fois sur le couvercle et sur sa boîte ou réceptacle. Par le procédé selon l'invention, on substitue le couvercle identifié par produit à un autre couvercle également identifié ou support qui servira à identifier la boîte qui sera alors vierge de toute impression. Il s'agit d'une avantage très conséquent, car les boîtes actuelles identifiées par une étiquette papier nécessitent la réalisation d'un stock très important si l'on fait référence par exemple à l'industrie des crèmes glacées, au nombre de parfums existants, en variétés, les sous-marques et autres. En outre, les étiquettes en papier sont soumises aux aléas et inconvénients rappelés initialement.

La nouvelle conception du film étiquette en matériau plastique offre donc une multitude d'avantages grâce à la maîtrise technique d'apposition sur le couvercle, et de possibilités d'application qui ne sont pas limitée au conditionnement de produits alimentaires.

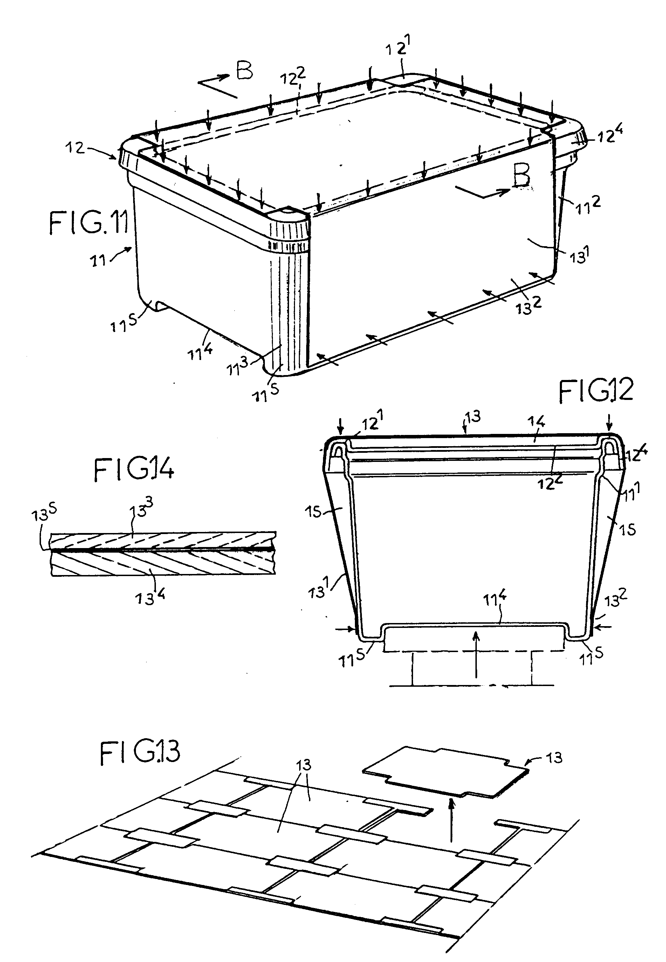

On décrit maintenant une variante de réalisation de l'emballage avec une mise en oeuvre différente du film en matière plastique imprimé support d'informations, sur l'emballage illustré aux figures 11 à 14.

Selon cette réalisation, un film de matière plastique enroulé en bobine est imprimé en offset sur une machine du type CHAMBON, puis découpé après impression. Des plaques de films établies dans les formats désirés définissent une pluralité d'espaces correspondant à des étiquettes imprimées par offset susceptibles de recouvrir la face supérieure du couvercle de l'emballage ainsi qu'au moins deux flancs opposés du réceptacle. L'étiquette est ainsi préétablie de manière indépendante aux formes à recouvrir de l'emballage. On obtient ainsi des lots de films étiquettes, par parfums, crème ou sorbet, par contenance, si l'on fait référence à l'industrie des crèmes glacées.

L'emballage comprend un réceptacle (10) thermoformé ou injecté de forme parallélépipédique correspondant à un volume désiré. Le réceptacle reçoit sur sa bordure périphérique (11.1) un couvercle (12) thermoformé ou injecté avec une collerette ou bordure périphérique (12.4) s'adaptant sur ladite bordure (11.1) précitée. ce couvercle peut être plat sur sa face supérieure (12.1) ou présenter un évidement (12.2) intérieur ainsi qu'illustré aux figures 11 à 14.
le procédé selon cette mise en oeuvre vise à déposer l'étiquette préimprimée et découpée après remplissage du réceptacle et pose du couvercle, en particulier sur la face supérieure (12.1) du couvercle et les deux flancs opposés (11.2) en regard du réceptacle. Afin d'assurer une tenue du film-étiquette (13) sur l'emballage, il est procédé d'une part à une opération de thermo-scellage ou collage, ou autre procédé d'adhésion du film-étiquette sur le pourtour de la collerette périphérique (12.4) du couvercle et d'autre part à une opération complémentaire après rabat des prolongements (13.1) d'étiquettes de thermo-scellage ou collage ou autres au niveau du fond (11.3) inférieur du réceptacle. Ledit fond présente à cet effet un évidement intérieur (11.4) délimitant les bordures (11.5) ou jambages longitudinaux formant piètement permettant l'insertion temporaire d'un moyen de contre-appui du type presse ou piston pour solidifier les jambages au moment de l'opération de fixation par thermoformage, scellage ou collage ou autres des extrémités (13.2) de l'étiquette. On obtient ainsi une double liaison de cette étiquette à la fois sur le couvercle et sur le réceptacle. La partie du film-étiquette est tendue et laisse apparaitre un intervalle (15) avec la paroi en regard du boîtier.

Dans cette mise en oeuvre, le film-étiquette précité (13) peut être un film dit complexe comprenant une première couche de polyester (PET) (13.3) d'épaisseur de l'ordre de 10 à 20 microns et de préférence 12 à 16 microns, associé à une couche support (13.4) de polystyrène d'épaisseur de l'ordre de 50 à 80 microns et de préférence 60 à 70 microns. La couche de polyester est fixée par collage (13.5) ou autre à la couche support de polystyrène. Le complexe parfaitement imprimable en offset et qui offre gràce à la couche de polyester toutes les garanties de solidité peut parfaitement, après découpe adaptée, être soit thermoscellé ou collé sur les boîtiers et leurs couvercles préalablement remplis et dotés de cette étiquette spéciale.

Ce film complexe qui comprend un support en polystyrène bi-orienté ou mono-orienté est parfaitement thermo-scellable ou collable sur l'emballage qui est également en polystyrène. La tenue au froid et à l'humidité de ce film complexe est satisfaisante en égard des conditions d'utilisation et de présentation des emballages pour produits alimentaires frais, surgelés, glaces et autres.

Cette mise en oeuvre présente des avantages similaires à ceux décrits précédemment.
selon cette mise en oeuvre, les emballage sont fabriqués, couvercle et réceptacle de manière standard, et l'opérateur utilise un stock d'étiquettes moins volumineux, moins coûteux, en modulant les quantités de chaque type beaucoup plus facilement. Les coûts de stockage sont considérablement réduits.

Un autre avantage réside dans la réalisation d'une chambre isolante (14) entre le film étiquetté disposé sur la face supérieure du couvercle lorsque celui-ci présente un évidement intérieur ainsi qu'illustré aux dessins. Le film étant thermoscellé ou collé sur la totalité de la collerette périphérique du couvercle, la chambre intérieure formée constitue une isolation complémentaire pour éviter la déperdition des frigories.

## Revendications

1. Elémént support d'informations ápte à obturer et/ou couvrir plusieurs récipients du type où l'élément support d'informations est constitué par un film en matière plastique imprimé constituant le film-étiquette dont les formes et dimensions permettent d'obturer et/ou de couvrir un ou plusieurs récipients ou une de leurs faces dans le même plan, et sur une ou plusieurs de la ou leurs autres faces dans d'autres plans, le dit element support étant caractérisé en ce qu'il est constitué d'une part par un film (1) en matière plastique imprimé tel que film-étiquette dont les formes et dimensions permettent d'obturer et/ou de couvrir un ou plusieurs récipients ou une de leurs faces dans un même plan et une ou plusieurs de la ou leurs faces dans d'autres plans, et d'autre part un support (2) du matériau plastique surmoulé sur le film-étiquette à l'endroit ou partie correspondant aux zones d'obturation et de recouvrement en laissant libres et pendantes une ou des parties du film-étiquette débordantes formant oreilles (1.2) pour couvrir après pose de l'élément sur le ou les récipients (4) ou articles remplis et rabattement de la ou des parties du film-étiquette pendantes sur la ou les autres faces ou côtés du ou des récipients, réceptacles ou articles et fixation à ceux-ci, et en ce que la fixation des extremites desdites oreilles (1.2) au(x) cote(s) du ou des recipients assure leur inviolebilité, en indiquant toute violation de l'embellage obtenu.

2. Elément support d'informations selon la revendication 1 caractérisé en ce que le support moulé par injection ou thermoformage est un couvercle (3) dont les formes et profils sont établis pour s'emboiter sur les formes complémentaires d' un réceptacle (4).

3. Elément support d'informations selon la revendication 1 caractérisé en ce que le support moulé par injection ou thermoformage constitue un moyen de liaison (5) et de recouvrement de plusieurs récipients (6) juxtaposés définissant un pack d'emballage.

4. Elément support d'informations selon la revendication 1 caractérisé en ce que le support moulé par injection ou thermoformage est un réceptacle, susceptible de recevoir un couvercle vierge sur lesquel est rabattu une partie pendante du film-étiquette.

5. Elémént support d'informations selon la revendication 1 et l'une quelconque des revendication 2, 3 et 4 caractérisé en ce que les parties pendantes du film-étiquette (1.2) formant oreilles sont rabattues sur les faces latérales du ou des récipients, réceptacles ou autres.

6. Elément support d'informations selon la revendication 1 et l'une quelconque des revendications 2, 3 et 4 caractérisé en ce que les parties pendantes (1.2) du film-étiquette sont rabattues sous la face inférieure du ou des récipients, réceptacles ou autres.

7. Elément support d'informations selon la revendication 1 et l'une quelconque des revendications 2, 3 et 4 caractérisé en ce qu'il présente une partie (1.2) du film-étiquette susceptible d'entourer et banderoler les différentes faces du réceptacle ou autres.

8. Procédé de fabrication de l'élément support d'information selon la revendication 4 et l'une quelconque des revendications 2 à 7 caractérisé en ce qu'on fabrique un element support d'information constitué par un film-étiquette (1) en matière plastique imprimé dont les formes et dimensions correspondent à l'étiquettage obturant et couvrant un ou plusieurs récipients (4), réceptacles ou autres sur la ou leurs faces supérieures et sur une ou plusieurs de leurs autres faces, on positionne au moins un film-étiquette (1) en égard d'au moins un moule à un ou plusieurs étages d'une presse à injecter ou à thermoformer de manière qu'un ou plusieurs supports (2) en matière plastique puisse être injecté ou thermoformé, en étant surmoulé sur le ou les films-étiquettes à l'endroit des parties correspondant aux zones d'obturation et/ou de recouvrement, en laissant libres et pendantes une ou des parties (1.2) de film débordante formant oreilles.

9. Procédé de fabrication de l'élément support selon la revendication 8 et des emballages et conditionnements mettant en oeuvre le procédé caractérisé en ce qu'il consiste à fabriquer un film-étiquette (1) en matière plastique imprimé dont les formes et dimensions correspondent à l'étiquettage obturant et/ou couvrant un ou plusieurs récipients ou articles (4), puis à surmouler sur la ou lesdits films-étiquettes un support (2) en matière plastique injectée ou thermoformé à l'endroit des parties correspondantes aux zones d'obturation et de recouvrement en laissant libre et pendante une ou des parties du film-étiquette débordantes formant oreilles (1.2), puis à remplir le ou les récipients ou articles de leurs contenus, puis à positionner l'élément support d'informations sur le ou les récipients, puis à rabattre la ou les parties du film-étiquette débordantes sur la ou les autres faces du ou des récipients ou articles puis à les fixer sur ces derniers en assurant l'inviolebilité du ou des recipients ou articles.

10. Procédé de fabrication de l'élément support selon la revendication 8 et des emballages et conditionnements mettant en oeuvre le procédé, caractérisé en ce qu'il consiste à fabriquer un film-étiquette 1 en matière plastique imprimée dont les formes et dimensions correspondent à l'étiquettage obturant et/ou couvrant un ou plusieurs récipients ou articles puis à surmouler sur la ou lesdits films-étiquette un support 2 en matière plastique en forme de réceptacle, et en laissant libres et pendantes une ou des parties du film-étiquette débordant formant oreilles (1.2), puis à remplir le réceptacle, puis à positionner un couvercle (3) de protection puis à rabattre la ou les parties du film-étiquette débordantes sur la face supérieures du couvercle puis à la fixer sur celles-ci.

11. Procédé de fabrication de l'élément support d'informations selon la revendication 8 caractérisé en ce que le film étiquette (1) est maintenu par une ou ses parties débordantes (1.2) par des moyens situés hors du moule, tandis que sa partie centrale destinée à recevoir par surmoulage le support injecté ou thermoformé en étant surmoulé se trouve situé entre l'empreinte et le moule femelle d'une presse.

12. Procédé de fabrication de l'élément support d'informations selon la revendication 8 caractérisé en ce que le film étiquette 1 est introduit dans le moule en laissant libre la ou les parties de film débordantes formant oreilles (1.2).

13. Procédé selon la revendication 8 et l'une quelconque des revendications 9, 10, 11, 12 caractérisé en ce que les films-étiquettes (1) sont préétablis et insérés dans un magasin d'alimentation situé au-dessus de l'empreinte et du moule femelle de la presse à injecter ou à thermoformer, des moyens de saisie, de positionnement et de présentation de la plaque-film intervenant pour positionner le film-étiquette entre l'empreinte et le moule femelle de la presse.

14. Procédé selon la revendication 8 et l'une quelconque des revendications 9, 10, 11, 12 caractérisé en ce que le film-étiquette (1) est enroulé en bobine dans une laize de largeur supérieure à son format, le film support est déroulé jusqu'à un poste de découpage de la plaque film, des moyens saisissant le film-étiquette découpé en le maintenant par une ou des oreilles (1.2) pour la positionner entre l'empreinte et le moule femelle de la presse, la forme du film découpé du reste du film étant réembobiné.

15. Elément support d'informations selon la revendication 1, caractérisé en ce qu'il comprend une plaque film en matière plastique, imprimée en offset, correspondant au format et dimensions d'une étiquette (13) recouvrant la partie supérieure (12.1) du couvercle (12) de l'emballage et au moins deux de ses faces latérales, ledit film étant fixé sur la collerette ou bordure périphérique (12.4) du couvercle et par ses extrémités (13.2) inférieures au niveau du fond du réceptacle constituant un jambage (11.5).

16. Elément support d'informations selon la revendication 15 caractérisé en ce que le film-étiquette est un film complexe comprenant une première couche de polyester (13.3) associée à une couche support (13.4) de polystyrène.

17. Elément support d'informations selon la revendication 16 caractérisé en ce que les couches de polyester et de polystyrène du film complexe sont associées par collage.

18. Elément support d'informations selon la revendication 15, caractérisé en ce que le couvercle (12) présente sur sa face supérieure (12.1) un évidement (12.2) interne constituant une chambre d'isolation entre la face en regard du film fixé sur le pourtour périphérique du couvercle et le fond dudit couvercle.

19. Elément support d'informations selon les revendications 15 et 16 caractérisé en ce que le film est thermo-scellé, collé ou autre sur le couvercle et le réceptacle réalisé en polystyrène.

20. Procédé de fabrication selon la revendication 15 et l'une quelconque des revendications 16 à 19 caractérisé en ce qu'on dispose sur un emballage classique comprenant un couvercle et un réceptacle, une plaque de film en provenance d'une bobine, préimprimée et prédécoupée selon des formats préétablis ; lesdites plaques de film comprenant une pluralité d'espaces correspondant à des étiquettes imprimées par offset susceptibles de recouvrir chacune la face supérieure du couvercle ainsi qu'au moins deux flancs opposés du réceptacle ; on procède à la fixation de l'étiquette par thermo-scellage, collage ou autre, d'une part sur le pourtour de la collerette ou bordure extérieure du couvercle et d'autre part près du fond (11.4) du réceptacle comprenant des jambages (11.5) entre lesquels est introduit un moyen de contre-appui lors de l'opération de fixation des extrémités du film-étiquette.

21. Elémént support imprimé selon l'une quelconque des revendications 1 à 20 caractérisé dans son application au conditionnement des produits alimentaires.

22. Elément support imprimé selon l'une quelconque des revendications 1 à 13, caractérisé en ce que le film-étiquette (1) est réalise en un matériau plastique compound.

23. Elément support imprimé selon l'une quelconque des revendications 1 à 13 caractérisé en ce que les parties pendantes formant oreilles (1.2) du film-étiquette (1) sont fixées par collage ou thermocollage sur la ou les faces de fixation du réceptacle (4) ou article correspondant.

## Claims

1. An information carrier designed to obturate and/or cover several containers of the type using printed plastic label films of the shape and size suitable for obturating and/or covering one or more containers or container sides in the same plane and one or more container sides in the other planes, said information carrier being characterized in that it is composed of a printed plastic label film (1) whose shape and size are designed to obturate and/or cover one or more containers or container sides in the same plane and one or more container sides in the other planes on the one hand and a plastic support part (2) moulded onto the obturating and/or covering parts of the label film on the other, leaving one or more parts of the label film to protrude as loose flaps (1.2) that, when the information carrier is placed onto filled container(s) (4) or article(s), are folded back and secured onto the other side(s) of the container(s), receptacle(s) or article(s), and in that the securing of said flaps (1.2) to the container side(s) renders the container(s) tamper-proof, the flaps showing whether the container has been tampered with or not.

2. An information carrier as claimed in claim 1, characterized in that the part obtained by injection moulding or thermoforming is a lid (3), the shape and size of which are such as to fit onto a container (4).

3. An information carrier as claimed in claim 1, characterized in that the part obtained by injection moulding or thermoforming constitutes a means of securing (5) and covering several containers (6) placed side by side constituting a multiple unit pack.

4. An information carrier as claimed in claim 1, characterized in that the part obtained by injection moulding or thermoforming is a container that can be covered by a blank lid onto which a loose flap of the label film can be folded back.

5. An information carrier as claimed in claim 1 and in any of claims 2, 3 and 4, characterized in that loose flaps (1.2) of the label film are folded back onto the sides of the container(s), receptacle(s) or similar.

6. An information carrier as claimed in claim 1 and in any of claims 2, 3 and 4, characterized in that loose flaps (1.2) of the label film are folded under the container(s), receptacle(s) or similar.

7. An information carrier as claimed in claim 1 and in any of claims 2, 3 and 4, characterized in that a part (1.2) of the label film can be wrapped around the sides of the receptacle or similar.

8. An information carrier manufacturing process as claimed in claim 1 and in any of claims 2 to 7, characterized in that to manufacture an information carrier consisting of a printed plastic label film (1) matching the shape and size of the label obturating and covering the top and one or more sides of one or more containers, receptacles or similar (4), at least one label film (1) is positioned within at least one single or multiple-stage mould of an injection moulding or thermoforming press such that one or more plastic support parts (2) can be injected or thermoformed and moulded onto the label film(s) at the location of the obturated or covered areas, leaving one or more parts (1.2) of the film to protrude as flaps.

9. An information carrier and container component manufacturing process as claimed in claim 8 using a process characterized in that it consists of manufacturing a printed plastic label film (1) the shape and size of which match those of the label obturating and/or covering one or more containers (4) or articles, and of moulding onto said label films at the position of the areas obturated and covered a plastic support part (2) obtained by injection moulding or thermoforming, leaving one or more of the parts of the label film to protrude as flaps (1.2), then of subsequently filling the container(s) or article(s), placing the information carrier onto the container(s), folding the flap(s) onto the other side(s) of the container(s) or article(s) and securing them to ensure such container(s) or article(s) are tamper-proof.

10. An information carrier and container component manufacturing process as claimed in claim 8 using a process characterized in that it consists of manufacturing a printed plastic label film (1) the shape and size of which match those of the label obturating and/or covering one or more containers or articles, and of moulding onto said label film(s) a plastic support part (2) in the form of a container, leaving one or more of the parts of the label film to protrude as loose flaps (1.2), then of subsequently filling the container, closing it using a protective lid (3) and folding the flap(s) over the top side of the lid and securing them.

11. An information carrier manufacturing process as claimed in claim 8, characterized in that label film (1) is held in place by one or more flaps (1.2) by means exterior to the mould, whereas the central part upon which the part obtained by injection moulding or thermoforming is to be moulded is positioned between the punch and the die of the press.

12. An information carrier manufacturing process as claimed in claim 8, characterized in that label film (1) is introduced into the mould with flap(s) (1.2) protruding.

13. A process as claimed in claim 8 and any of claims 9, 10, 11, 12, characterized in that pre-established label films (1) are inserted into a magazine located over the punch and die of the injection or thermoforming press, gripping and positioning means placing the label film between the punch and the die of the press.

14. A process as claimed in claim 8 and in any of claims 9, 10, 11, 12, characterized in that label films (1) are part of a roll base of greater width than the labels that is unreeled until it reaches a film plate cutting station where the cut-out labels are held by one or more flaps (1.2) and positioned between the punch and the die of the press, while the roll is wound back onto the reel.

15. An information carrier as claimed in claim 1, characterized in that it incorporates an offset-printed plastic film plate of the shape and size of a label (13) covering top part (12.1) of container lid (12) and at least two of its sides, said film being secured to flange or peripheral rim (12.4) of the lid and to the recessed part of container bottom (11.5) by its lower ends (13.2).

16. An information carrier as claimed in claim 15, characterized in that the label film is a compound film comprising a polyester top (13.3) on a polystyrene backing (13.4).

17. An information carrier as claimed in claim 16, characterized in that the polyester and polystyrene parts of the compound film are glued together.

18. An information carrier as claimed in claim 15, characterized in that lid (12) features a recessed area (12.2) on its top side (12.1) acting as an insulating chamber between the side facing the film secured to the peripheral rim of the lid and the bottom of said lid.

19. An information carrier as claimed in claims 15 and 16, characterized in that the film is heat-sealed, glued or otherwise secured to the polystyrene container and lid.

20. Manufacturing process as claimed in claim 15 and any of claims 16 to 19, characterized in that a preprinted film plate cut from a reel in a pre-established size is placed onto a conventional container comprising a lid; said film plates containing multiple spaces matching offset-printed labels each suitable to cover the top part of the lid and at least two opposite sides of the container; the label is heat-sealed, glued or otherwise secured to the flange or peripheral rim of the lid at one end, the other end being secured near bottom (11.4) of the container, a means of counter-bracing being inserted into recessed part (11.5) of the container bottom while the label film ends are being secured.

21. Printed base as claimed in any of claims 1 to 20, characterized by its application to food packaging.

22. Printed base as claimed in any of claims 1 to 13, characterized in that label film (1) consists of a plastic compound.

23. Printed base as claimed in any of claims 1 to 13, characterized in that loose flaps (1.2) of label film (1) are secured to the appropriate side(s) of matching container (4) or article by gluing or heat-sealing.

## Patentansprüche

1. Zum Verschließen und/oder Abdecken mehrerer Behältnisse geeignetes informationstragendes Element, bestehend aus einer bedruckten - als Etikettenfolie dienenden - Plastikfolie, deren Formen und Abmessungen das Verschließen und/oder Abdecken eines oder mehrerer Behältnisse bzw. einer ihrer auf der gleichen Ebene liegenden Flächen und einer oder mehrerer der bzw. ihrer anderen Fläche(n) auf anderen Ebenen ermöglichen, wobei das informationstragende Element dadurch gekennzeichnet ist, daß es zum einen aus einer Folie (1) aus bedrucktem Kunststoff als Etikettenfolie besteht, deren Formen und Abmessungen das Verschließen und/oder Abdecken eines oder mehrerer Behältnisse bzw. einer ihrer auf der gleichen Ebene liegenden Flächen und einer oder mehrerer der bzw. ihrer anderen Fläche(n) auf anderen Ebenen ermöglichen, und zum anderen aus einem Träger (2) für das Kunststoffmaterial, der an der den Verschluß- und Abdeckbereichen entsprechenden Stelle (bzw. dem Teil) über der Etikettenfolie aufgegossen ist, wobei ein bzw. mehrere vorstehende, sog. "Ohren" (1.2) bildende Teile der Etikettenfolie frei hängen bleiben, die nach dem Auflegen des Elements auf das bzw. die gefüllten Behältnisse (4) bzw. Artikel, auf die andere(n) Fläche(n) bzw. Seiten des bzw. der Behälter, Behältnisse bzw. Artikel umgelegt und daran befestigt sind, und dadurch gekennzeichnet, daß die Befestigung der Enden der besagten "Ohren" (1.2) an der Seite (den Seiten) des bzw. der Behältnisse deren Unverletzlichkeit gewährleistet und das Aufbrechen der so hergestellten Verpackung erkennen läßt.

2. Informationstragendes Element nach dem Anspruch 1, dadurch gekennzeichnet, daß der durch Spritzguß oder Warmformung hergestellte Träger ein Deckel (3) ist, dessen Formen und Profile so ausgelegt sind, daß er auf die entsprechenden Formen eines Behältnisses (4) aufgedrückt werden kann.

3. Informationstragendes Element nach dem Anspruch 1, dadurch gekennzeichnet, daß der durch Spritzguß oder Warmformung hergestellte Träger zur Verbindung (5) und Abdeckung mehrerer nebeneinander angeordneter Behältnisse (6) dient und dadurch eine Verpackungseinheit bildet.

4. Informationstragendes Element nach dem Anspruch 1, dadurch gekennzeichnet, daß der durch Spritzguß oder Warmformung hergestellte Träger ein Behälter ist, der einen unbedruckten Deckel aufnehmen kann, auf den ein herabhängender Teil der Etikettenfolie umgeklappt wird.

5. Informationstragendes Element nach dem Anspruch 1 und irgendeinem der Ansprüche 2, 3 und 4, dadurch gekennzeichnet, daß die herabhängenden Teile (1.2) der ohrenbildenden Etikettenfolie auf die seitlichen Flächen des bzw. der Behältnisse, Behälter, usw. umgeklappt werden.

6. Informationstragendes Element nach dem Anspruch 1 und irgendeinem der Ansprüche 2, 3 und 4, dadurch gekennzeichnet, daß die herabhängenden Teile (1.2) der Etikettenfolie unter die untere Fläche des bzw. der Behältnisse, Behälter usw. umgeklappt werden.

7. Informationstragendes Element nach dem Anspruch 1 und irgendeinem der Ansprüche 2, 3 und 4, dadurch gekennzeichnet, daß ein Teil (1.2) der Etikettenfolie so ausgebildet ist, daß er die einzelnen Seiten des Behälters usw. umgeben und als Banderole umringen kann.

8. Herstellungsverfahren des informationstragenden Elements nach dem Anspruch 1 und irgendeinem der Ansprüche 2-7, daduch gekennzeichnet, daß ein informationstragendes Element hergestellt wird, das aus einer bedruckten Etikettenfolie (1) aus Kunststoff besteht, deren Formen und Abmessungen der Etikettierung für den Verschluß und die Abdeckung eines oder mehrerer Behältnisse (4), Behälter usw. auf der bzw. ihren oberen Flächen und auf einer bzw. mehreren ihrer sonstigen Flächen entsprechen, daß weiterhin mindestens eine Etikettenfolie (1) gegenüber mindestens einer Form auf einer oder mehreren Stufen einer Spritzguß- oder Warmformpresse derart positioniert wird, daß ein bzw. mehrere Kunststoffträger (2) gespritzt bzw. warmgeformt werden können, wobei sie auf dem bzw. den Etikettenfolien an der Stelle der Teile aufgegossen werden, die den Verschluß- und/oder Abdeckbereichen entsprechen, und wobei eine bzw. mehrere vorstehende, ohrenbildende Folienteile (1.2) frei herunterhängen.

9. Herstellungsverfahren des informationstragenden Elements nach dem Anspruch 8 und der Verpackungen und Umhüllungen, bei denen das beschriebene Verfahren zum Einsatz kommt, dadurch gekennzeichnet, daß es darin besteht, eine bedruckte Etikettenfolie (1) aus Kunststoff herzustellen, deren Formen und Abmessungen der Etikettierung für den Verschluß und/oder die Abdeckung eines oder mehrerer Behältnisse bzw. Artikel (4) entsprechen, dann auf die Etikettenfolie(n) an der Stelle der Teile, die den Verschluß- und/oder Abdeckbereichen entsprechen, wobei eine bzw. mehrere vorstehende, ohrenbildende Folienteile (1.2) frei herunterhängen, einen Träger (2) aus spritzgegossenem oder warmgeformtem Kunststoff aufzugießen, dann das bzw. die Behältnisse bzw. Artikel mit ihrem Inhalt zu füllen, dann das informationstragende Element auf das bzw. die Behältnisse zu positionieren, dann das bzw. die vorstehenden Teile der Etikettenfolie auf die andere(n) Seite(n) des bzw. der Behältnisse bzw. Artikel umzuklappen und sie dann darauf zu befestigen, wobei die Unverletzlichkeit des bzw. der Behältnisse bzw. Artikel gewährleistet wird.

10. Herstellungsverfahren des informationstragenden Elements nach dem Anspruch 8 und der Verpackungen und Umhüllungen, bei denen das beschriebene Verfahren zum Einsatz kommt, dadurch gekennzeichnet, daß es darin besteht, eine bedruckte Etikettenfolie (1) aus Kunststoff herzustellen, deren Formen und Abmessungen der Etikettierung für den Verschluß und/oder die Abdeckung eines oder mehrerer Behältnisse bzw. Artikel entsprechen, dann auf die Etikettenfolie(n) einen Träger (2) aus Kunststoff in Behälterform aufzugießen, wobei eine bzw. mehrere vorstehende, ohrenbildende Folienteile (1.2) frei herunterhängen, dann den Behälter zu füllen, dann einen Schutzdeckel (3) in Position zu bringen, dann das bzw. die vorstehenden Teile der Etikettenfolie auf die obere Fläche des Deckels umzulegen und sie dann darauf zu befestigen.

11. Herstellungsverfahren des informationstragenden Elements nach dem Anspruch 8, dadurch gekennzeichnet, daß die Etikettenfolie (1) an einem oder mehreren vorstehenden Teilen (1.2) durch außerhalb der Form gelegene Mittel festgehalten wird, während der mittlere, für die Aufnahme des spritzgegossenen bzw. warmgeformten Trägers bestimmte Teil nach dem Aufgießen zwischen dem Nest und der Aufnahmeform einer Presse zu liegen kommt.

12. Herstellungsverfahren des informationstragenden Elements nach dem Anspruch 8, dadurch gekennzeichnet, daß die Etikettenfolie (1) in die Form eingeführt wird, wobei das bzw. die vorstehenden, ohrenbildenden Folienteile (1.2) frei bleiben.

13. Verfahren nach dem Anspruch 8 und irgendeinem der Ansprüche 9, 10, 11 oder 12, dadurch gekennzeichnet, daß die Etikettenfolien (1) vorgefertigt und in ein Zufuhrmagazin oberhalb des Nestes und der Aufnahmeform der Spritzguß- oder Warmformmaschine eingeführt sind, wobei Einrichtungen für das Aufgreifen, Positionieren und Präsentieren der Folienplatte zum Einsatz kommen, um die Etikettenfolie zwischen das Nest und die Aufnahmeform der Presse zu führen.

14. Verfahren nach dem Anspruch 8 und irgendeinem der Ansprüche 9, 10, 11 oder 12, dadurch gekennzeichnet, daß die Etikettenfolie (1) spulenförmig in einer Bahn aufgerollt ist, die breiter ist als das Format, daß die Trägerfolie bis zu einer Schneidestation der Folienplatte abgerollt wird, wobei die abgetrennte Etikettenfolie aufgegriffen und an einem bzw. mehreren "Ohren" (1.2) festgehalten wird, um sie zwischen das Nest und die Aufnahmeform der Presse zu führen, während die übrige Folie wieder aufgewickelt wird.

15. Informationstragendes Element nach dem Anspruch 1, dadurch gekennzeichnet, daß es eine Folienplatte aus offset-bedrucktem Kunststoff umfaßt, die dem Format und den Abmessungen eines Etiketts (13) entspricht, das den oberen Teil (12.1) des Deckels (12) der Verpackung und mindestens zwei Seitenflächen bedeckt, wobei die Folie am Bund bzw. äußeren Rand (12.4) des Deckels und mit den unteren Enden (13.2) am Boden des bogenbildenden Behälters (11.5) befestigt wird.

16. Informationstragendes Element nach dem Anspruch 15, dadurch gekennzeichnet, daß die Etikettenfolie eine Komplexfolie ist, die aus einer ersten Polyesterschicht (13.3) in Verbindung mit einer Unterschicht (13.4) aus Polystyrol besteht.

17. Informationstragendes Element nach dem Anspruch 16, dadurch gekennzeichnet, daß die Polyester- und Polystyrolschicht der Komplexfolie miteinander verklebt sind.

18. Informationstragendes Element nach dem Anspruch 15, dadurch gekennzeichnet, daß der Deckel (12) auf der Oberseite (12.1) eine innere Aussparung (12.2) aufweist, die eine Isolationskammer zwischen der Fläche gegenüber der am Außenrand des Deckels befestigten Folie und dem Boden des Deckels bildet.

19. Informationstragendes Element nach dem Anspruch 15 und 16, dadurch gekennzeichnet, daß die Folie auf dem Deckel und dem Polystyrolbehälter heißversiegelt, verklebt oder in sonstiger Weise befestigt ist.

20. Herstellungsverfahren nach dem Anspruch 15 und irgendeinem der Ansprüche 16-19, dadurch gekennzeichnet, daß auf einer herkömmlichen Verpackung mit Deckel und Behälter eine von einer Spule kommende Folienplatte aufgebracht wird, die nach vorgegebenen Formaten vorbedruckt und vorgestanzt ist; diese Folienplatten besitzen mehrere Felder mit offset-bedruckten Etiketten, die jeweils die Oberfläche des Deckels sowie mindestens zwei gegenüberliegende Seiten des Behälters bedecken können; das Etikett wird heißversiegelt, verklebt oder in sonstiger Weise befestigt - einerseits am Bund bzw. Außenrand des Deckels und andererseits am Boden (11.4) des Behälters einschließlich der Bogenstücke (11.5), zwischen denen bei der Befestigung der Enden der Etikettenfolie eine entsprechende Vorrichtung eingeführt wird.

21. Nach irgendeinem der Ansprüche 1-20 bedruckter Träger, dadurch gekennzeichnet, daß er für die Umhüllung von Nahrungsmitteln Anwendung findet.

22. Nach irgendeinem der Ansprüche 1-13 bedruckter Träger, dadurch gekennzeichnet, daß die Etikettenfolie (1) aus einem Verbundkunststoff besteht.

23. Nach irgendeinem der Ansprüche 1-13 bedruckter Träger, dadurch gekennzeichnet, daß die herabhängenden, ohrenbildenden Teile (1.2) der Etikettenfolie (1) auf der bzw. den Befestigungsflächen des entsprechenden Behälters (4) bzw. Artikels verklebt bzw. heißverklebt sind.
